# FASCICULE DE BREVET EUROPEEN

(11) **EP 1 437 280 B1**
(45) Date de publication et mention de la délivrance du brevet: **31.08.2005**
(21) Numéro de dépôt: 04000060.6
(22) Date de dépôt: 05.01.2004
(51) Int. Cl.: B60T 13/57

(54) **Servomoteur pneumatique à phase de rééquilibrage de durée réduite**
Pneumatischer Servo mit reduzierter Ausgleichdauer
Pneumatic servo with reduced equilibrium time

(30) Priorité: 07.01.2003 FR 0300116
(43) Date de publication de la demande: 14.07.2004
(73) Titulaire: ROBERT BOSCH GMBH, 70442 Stuttgart (DE)
(72) Inventeur: Richard, Philippe, 77500 Chelles (FR); Verbo, Ulysse, 08190 Sant Cugat (ES); Maligne, Jean-Charles, 93300 Aubervilliers (FR); Lacroix, Stéphane, 77220 Tournan en Brie (FR)
(74) Mandataire: Hurwic, Aleksander Wiktor

(56) Documents cités:
- DE-A- 19 835 772
- GB-A- 2 157 378
- US-A- 5 651 300
- US-B1- 6 477 935

## Description

L'invention concerne un servomoteur pneumatique d'assistance au freinage pour un véhicule automobile.

L'invention concerne plus particulièrement un servomoteur pneumatique d'assistance au freinage pour un véhicule automobile, du type qui comporte une enveloppe rigide à l'intérieur de laquelle est mobile une cloison transversale délimitant de façon étanche une chambre avant, soumise à une première pression, et une chambre arrière, soumise à une deuxième pression variant entre la première pression et une pression supérieure à la première pression, qui est susceptible de solliciter une tige d'actionnement d'un maître cylindre associé au servomoteur par l'intermédiaire d'un disque de réaction, du type qui comporte un piston mobile tubulaire qui est monté coulissant dans l'enveloppe et dont un tronçon avant est solidaire de la cloison mobile, du type qui comporte une tige de commande se déplaçant dans le piston sélectivement en fonction d'un effort axial d'entrée exercé vers l'avant à l'encontre d'un effort de rappel, du type dans lequel les mouvements de la tige de commande sont susceptibles de déterminer les ouvertures et fermetures d'au moins un clapet axial dit "d'admission" qui est interposé entre une source de pression soumise à la pression supérieure à la première pression et la chambre arrière, et d'au moins un clapet axial dit "de rééquilibrage" qui est interposé entre la chambre avant et la chambre arrière, pour actionner la cloison mobile, et du type dans lequel un plongeur, qui est reçu dans le piston tubulaire, qui traverse la cloison mobile, et qui est solidaire de l'extrémité de la tige de commande, est susceptible de solliciter directement la tige d'actionnement du maître-cylindre par l'intermédiaire du disque de réaction.

On connaît de nombreux exemples de servomoteurs conventionnels de ce type. Le document US 5 651 300 A divulgue le préambule de la revendication 1.

Dans un tel servomoteur, le piston est solidaire de la paroi mobile. Il est par exemple emboîté au travers de la cloison mobile. Par ailleurs, le clapet de rééquilibrage et le clapet d'admission font partie d'un clapet unique à trois voies dont un siège commun est constitué d'une face avant d'épaulement d'un élément mobile qui est rappelé élastiquement contre une collerette du plongeur et contre une collerette du piston desquelles il est susceptible d'être sélectivement disjoint pour ouvrir le clapet de rééquilibrage ou le clapet d'admission.

Ainsi, un conduit sensiblement radial qui traverse le piston et qui débouche dans la chambre avant et un conduit sensiblement axial qui débouche à l'extérieur du servomoteur sont susceptibles d'être mis sélectivement en communication par l'intermédiaire d'un des clapets avec un conduit radial qui traverse le piston et qui débouche dans la chambre arrière pour maintenir ou annuler une différence de pression entre les chambres arrière et provoquer les déplacements de la cloison mobile.

Une telle conception présente l'inconvénient de nécessiter des conduits réalisés dans le piston suivant des formes complexes, qui perturbent l'écoulement de l'air. De ce fait, un tel servomoteur présente généralement des temps de réponse relativement élevés, et se révèle bruyant.

Par ailleurs, une telle conception est particulièrement onéreuse à mettre en oeuvre, car elle nécessite d'utiliser un piston dont les formes intérieures, destinées à former les conduits, ne peuvent être réalisées que par des procédés d'usinage ou de moulage complexes.

L'invention propose une conception permettant de remédier à ces inconvénients dans laquelle les conduits sont en majeure partie axiaux et font partie de différents éléments tubulaires du servomoteur. Cette conception permet de favoriser l'écoulement de l'air au travers de clapets, ce qui permet de réduire les temps de réponse du servomoteur tout en lui garantissant un fonctionnement silencieux. De surcroît, cette nouvelle conception permet de réaliser la plupart des éléments du servomoteur à l'aide de procédés de découpe et d'emboutissage, ou encore d'un procédé de moulage d'un matériau plastique, moins onéreux que les procédés d'usinage conventionnels.

Dans ce but, l'invention propose un servomoteur du type décrit précédemment, caractérisé en ce qu'il comporte :
- un élément tubulaire flottant, qui est monté coulissant sur un tronçon arrière du piston tubulaire et qui est rappelé élastiquement vers la cloison mobile, dont une face transversale comporte un premier élément transversal d'étanchéité du clapet axial d'admission et dont une autre face transversale décalée comporte un premier élément transversal d'étanchéité du clapet axial de rééquilibrage,
- un second élément transversal complémentaire d'étanchéité du clapet axial d'admission, porté par le plongeur, et
- un second élément transversal complémentaire d'étanchéité du clapet axial de rééquilibrage, constitué d'au moins une portion de la face délimitant les tronçons avant et arrière du piston,
et en ce qu'il comporte un ressort de rappel interposé axialement dans l'élément tubulaire flottant entre le plongeur et le tronçon arrière du piston tubulaire pour exercer un effort de rappel sur la tige de commande.

Selon d'autres caractéristiques de l'invention :
- le clapet axial d'admission est agencé à l'extrémité d'une chambre intérieure du piston tubulaire qui est formée dans le tronçon arrière du piston et qui communique radialement avec la chambre arrière, le premier élément transversal d'étanchéité du clapet axial d'admission entourant un conduit d'admission axial qui est formé dans l'élément tubulaire flottant et qui communique avec le milieu extérieur et le second élément transversal complémentaire d'étanchéité du clapet axial d'admission étant reçu avec jeu dans un perçage axial du piston communiquant avec la chambre intérieure,
- le clapet axial de rééquilibrage est agencé à l'extérieur du piston tubulaire et il est agencé radialement à l'extérieur d'au moins un conduit de rééquilibrage du piston tubulaire mettant en communication la chambre avant et la chambre arrière,
- l'élément tubulaire flottant comporte :
   - un tronçon tubulaire avant, monté coulissant sur le tronçon arrière du piston, qui porte le premier élément d'étanchéité du clapet de rééquilibrage, et qui est destiné à coopérer avec le second élément d'étanchéité du clapet de rééquilibrage porté par la portion de la face arrière du tronçon avant du piston, les premier et second éléments d'étanchéité du clapet de rééquilibrage étant agencés radialement au moins en partie à l'extérieur d'au moins un perçage de communication entre la chambre avant et la chambre arrière qui traverse le tronçon avant du piston,
   - un tronçon tubulaire intermédiaire, qui est monté coulissant sur le tronçon arrière du piston, et dont au moins une lumière longitudinale est agencée radialement au droit d'au moins une lumière longitudinale du tronçon arrière du piston qui permet la communication entre la chambre intérieure du piston et la chambre arrière,
   - un tronçon tubulaire arrière, d'un diamètre inférieur au diamètre du tronçon intermédiaire, qui forme le conduit communiquant avec le milieu extérieur et qui est monté coulissant sur au moins un tronçon tubulaire arrière du plongeur traversé par la tige de commande,
   et une paroi transversale de jonction entre les tronçons intermédiaire et arrière de l'élément tubulaire, agencée sensiblement axialement à proximité du perçage d'extrémité du tronçon tubulaire arrière du piston, comporte le premier élément d'étanchéité du clapet axial d'admission qui est destiné à coopérer avec le second élément d'étanchéité du clapet axial d'admission qui est porte par le plongeur et qui est reçu dans ledit perçage d'extrémité du tronçon tubulaire arrière du piston,
- le premier élément d'étanchéité du clapet axial d'admission est constitué d'une partie annulaire face avant de la paroi transversale de jonction entre les tronçons intermédiaire et arrière de l'élément tubulaire,
- le second élément transversal complémentaire d'étanchéité du clapet axial d'admission est constitué d'un joint annulaire qui est porté par une face arrière annulaire d'une coupelle qui est portée par le plongeur et qui est reçue avec jeu dans le perçage d'extrémité de la chambre du piston tubulaire,
- le premier élément d'étanchéité du clapet axial de rééquilibrage est constitué d'un joint annulaire qui est reçu dans une gorge pratiquée dans la face avant du tronçon tubulaire d'extrémité avant de l'élément tubulaire,
- le second élément transversal complémentaire d'étanchéité du clapet axial de rééquilibrage est constitué d'une portion annulaire de la face arrière délimitant les tronçons avant et arrière du piston tubulaire,
- le servomoteur comporte une pluralité des perçages qui sont répartis angulairement de manière régulière au travers du tronçon avant du piston et qui débouchent dans la face arrière délimitant les tronçons avant et arrière du piston tubulaire pour former les conduits de rééquilibrage,
- le corps du piston comporte un alésage axial interne, qui débouche dans la face avant du piston et dans la chambre intérieure du piston, et qui reçoit :
   - l'extrémité de la tige d'actionnement du maître cylindre,
   - le disque de réaction,
   - une douille coulissante, traversée par un tronçon avant du plongeur, dont un épaulement comporte une face avant, qui est coaxiale à un palpeur formé à l'extrémité avant du plongeur, pour solliciter le disque de réaction,
- une paroi transversale, formée à l'extrémité de l'alésage axial interne, forme d'un côté une butée pour l'épaulement de la douille et reçoit du côté opposé l'extrémité du ressort de rappel dont l'autre extrémité est en appui sur une face avant de la coupelle du plongeur,
- une face d'épaulement délimitant le tronçon avant et le tronçon intermédiaire de l'élément tubulaire reçoit en appui l'extrémité d'un ressort de rappel dont l'autre extrémité est en appui sur une face d'épaulement de l'enveloppe,
- la coupelle est interposée axialement entre les tronçons arrière et avant du plongeur avec lesquels elle est venue de matière,
- un joint annulaire est interposé entre un tronçon tubulaire arrière de l'enveloppe et le tronçon tubulaire arrière de l'élément tubulaire flottant pour assurer l'étanchéité entre le milieu extérieur et la chambre arrière du servomoteur,
- le tronçon intermédiaire de l'élément tubulaire flottant comporte une pluralité de lumières longitudinales agencées chacune au droit de lumières longitudinales du tronçon arrière du piston, et le tronçon tubulaire intermédiaire de l'élément tubulaire flottant comporte au moins un doigt d'immobilisation en rotation qui est monté coulissant dans au moins une desdites lumières du tronçon arrière du piston,
- au moins un élément parmi la cloison mobile, l'élément tubulaire flottant, la douille intermédiaire, le plongeur et le piston, est réalisé par des procédés de découpe et d'emboutissage,
- au moins un élément parmi la cloison mobile, l'élément tubulaire flottant, la douille intermédiaire, le plongeur et le piston, est réalisé par un procédé de moulage d'un matériau plastique.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'ensemble d'un servofrein comportant un servomoteur pneumatique d'assistance au freinage réalisé conformément à un état antérieur de la technique ;
- la figure 2 est une vue de détail du servomoteur de la figure 1 ;
- la figure 3 est une vue de détail en coupe axiale d'un servomoteur réalisé conformément à l'invention vu dans une position de repos, le plongeur étant en repos, le clapet de rééquilibrage étant fermé et le clapet d'admission étant fermé ;
- la figure 4 est une vue de détail en coupe axiale d'un servomoteur réalisé conformément à l'invention vu dans une position d'équilibre, le plongeur étant actionné, le clapet de rééquilibrage étant fermé et le clapet d'admission étant fermé ;
- la figure 5 est une vue de détail en coupe axiale d'un servomoteur réalisé conformément à l'invention vu dans une position de saturation, le plongeur étant actionné, le clapet de rééquilibrage étant fermé et le clapet d'admission étant ouvert ;
- la figure 6 est une vue de détail en coupe axiale d'un servomoteur réalisé conformément à l'invention vu dans une position de retour, le plongeur étant relâché, le clapet de rééquilibrage étant ouvert et le clapet d'admission étant refermé.

Dans la description qui va suivre, des chiffres de référence identiques désignent des pièces identiques ou ayant des fonctions similaires.

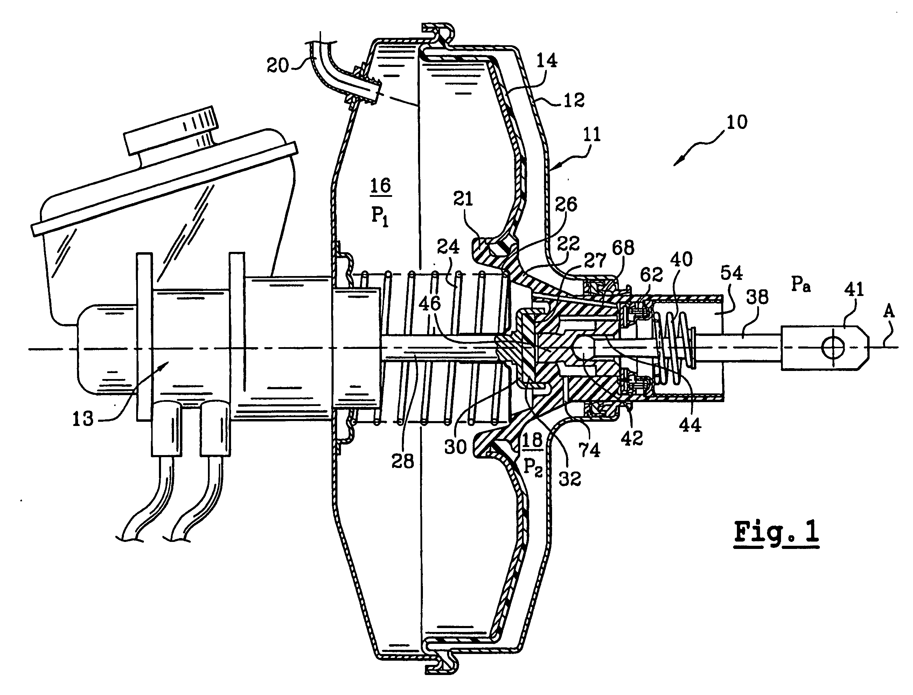

Par convention, les termes "avant", "arrière", supérieur", "inférieur" désignent respectivement des éléments ou des positions orientés respectivement vers la gauche, la droite, le haut, ou le bas des figures 1 à 6.

On a représenté à la figure 1 l'ensemble d'un servofrein 10 comportant un servomoteur 11 pneumatique conventionnel d'assistance au freinage pour un véhicule automobile. Le servomoteur 11 est destiné à actionner un maître-cylindre 13 de freinage du véhicule.

De manière connue, le servomoteur pneumatique 10 comporte une enveloppe rigide 12 à l'intérieur de laquelle est montée mobile une cloison 14 transversale qui délimite de façon étanche une chambre avant 16, soumise à une première pression "P₁", et une chambre arrière 18 soumise à une deuxième pression "P₂". La deuxième pression "P₂" est susceptible de varier entre la valeur de la pression "P₁" et la valeur d'une pression "Pₐ" supérieure à la pression "P₁" pour provoquer les déplacements de la cloison 14, qui est susceptible de solliciter, comme on le verra ultérieurement une tige 28 d'actionnement du maître-cylindre 13.

Plus particulièrement, la pression "P₁" correspond notamment à une pression fournie par une source de dépression du véhicule. Dans le cas d'un moteur à allumage commandé, la pression de dépression "P₁" est par exemple fournie par un collecteur d'admission du moteur du véhicule et, dans le cas d'un moteur à allumage par compression de type "diesel", la pression de dépression "P₁" est par exemple fournie par une pompe à vide du véhicule.

La chambre avant 16 est reliée à la source de dépression du véhicule par l'intermédiaire d'un conduit 20 de dépression qui débouche dans l'enveloppe 12.

Le servomoteur pneumatique 11 comporte un piston mobile 22 d'axe "A" qui est solidaire de la cloison mobile 14. Par exemple, un tronçon avant 21 du piston mobile 22 est emboîté au travers de la cloison mobile 14.

A l'intérieur de l'enveloppe 12, la cloison mobile 14 est rappelée élastiquement vers l'arrière par un ressort 24 de rappel qui prend appui sur l'enveloppe 12 et sur une face avant 26 du piston mobile 22. La face avant 26 du piston mobile 22 comporte une portée cylindrique avant 27, qui est agencée en regard d'un disque 32 de réaction en réaction qui est logé dans une coupelle 30 solidaire de la tige 28 d'actionnement du maître-cylindre 13.

Une tige 38 de commande, qui est par exemple reliée à une pédale de frein du véhicule par l'intermédiaire d'un manchon 41 d'accouplement, est susceptible de se déplacer dans le piston mobile 22, sélectivement en fonction d'un effort axial d'entrée exercé vers l'avant sur le manchon 41. L'effort d'actionnement est exercé à l'encontre d'un effort de rappel produit sur la tige 38 par un ressort de rappel 40 qui est interposé entre le piston mobile 22 et la tige 38 de commande.

L'extrémité avant de la tige 38 de commande qui est opposée au manchon 41 est conformée en rotule 42 et est reçue dans un logement 44 complémentaire formé dans un plongeur 46 sensiblement cylindrique qui est monté coulissant dans le piston mobile 22.

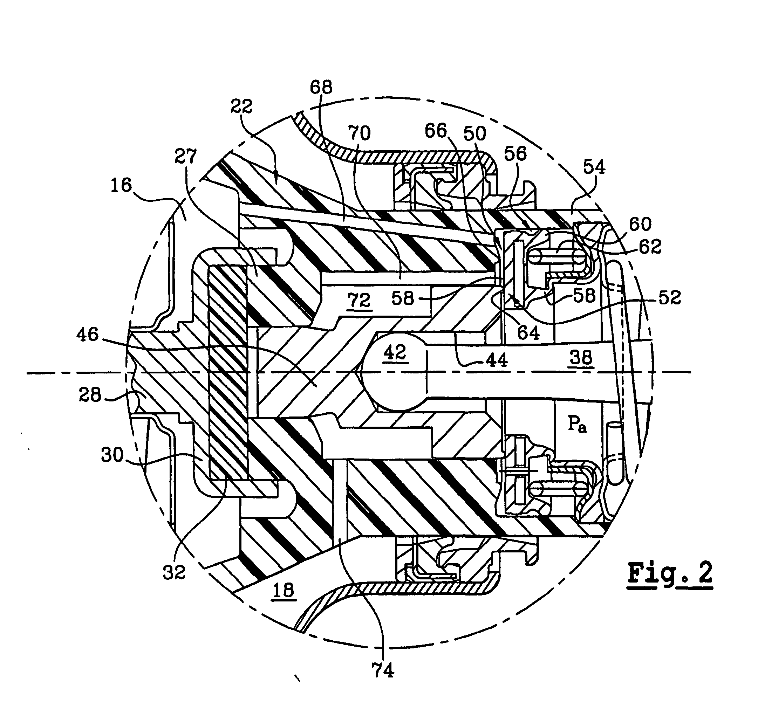

Comme l'illustre plus particulièrement la figure 2, les mouvements de la tige 38 de commande sont susceptibles de déterminer les ouvertures et fermetures d'au moins un clapet 52 axial dit "d'admission" qui est interposé entre une source de pression soumise à la pression "Pₐ" supérieure à la première pression "P₁" et la chambre 18 arrière, et d'au moins un clapet 50 axial dit "de rééquilibrage" qui est interposé entre la chambre 16 avant et la chambre 18 arrière, pour actionner la cloison 14 mobile précédemment décrite.

De manière connue, et de manière non limitative de l'invention, la source de pression soumise à la pression "Pₐ" correspond au milieu atmosphérique ambiant. A cet effet, le clapet 50 débouche directement dans une extrémité arrière 54 du corps du piston 22 formant un conduit axial qui est ouvert à l'air libre.

De manière conventionnelle, le clapet 50 de rééquilibrage et le clapet 52 d'admission font partie d'un clapet 56 unique à trois voies dont un siège commun 58 est constitué d'une face avant d'épaulement d'un élément 60 annulaire mobile qui est rappelé élastiquement par un ressort 62 contre une collerette 64 du plongeur 46 et contre une collerette 66 du piston 22.

Ainsi, un conduit 68 sensiblement radial qui traverse le piston 22 et qui débouche dans la chambre avant 16, ou bien le conduit 54 sensiblement axial qui débouche à l'extérieur du servomoteur 11, sont susceptibles d'être mis sélectivement en communication, par l'intermédiaire d'un alésage 72 de guidage du plongeur et d'une rainure 70 formée dans cet alésage, avec un conduit radial 74 qui traverse le piston 22 et qui débouche dans la chambre arrière 18 pour maintenir ou annuler une différence de pression entre les chambres avant 16 et arrière 18 et provoquer ainsi les déplacements de la cloison mobile 14.

Une telle conception est particulièrement onéreuse à mettre en ceuvre, car elle nécessite d'utiliser un piston dont les formes intérieures, destinées à former les conduits 68 et 74, ne peuvent être réalisées que par des procédés d'usinage ou de moulage complexes.

Pour remédier à cet inconvénient, l'invention propose un servomoteur 11 du type décrit précédemment, dans lequel les conduits d'admission et de rééquilibrage sont formés dans des éléments tubulaires du servomoteur 11.

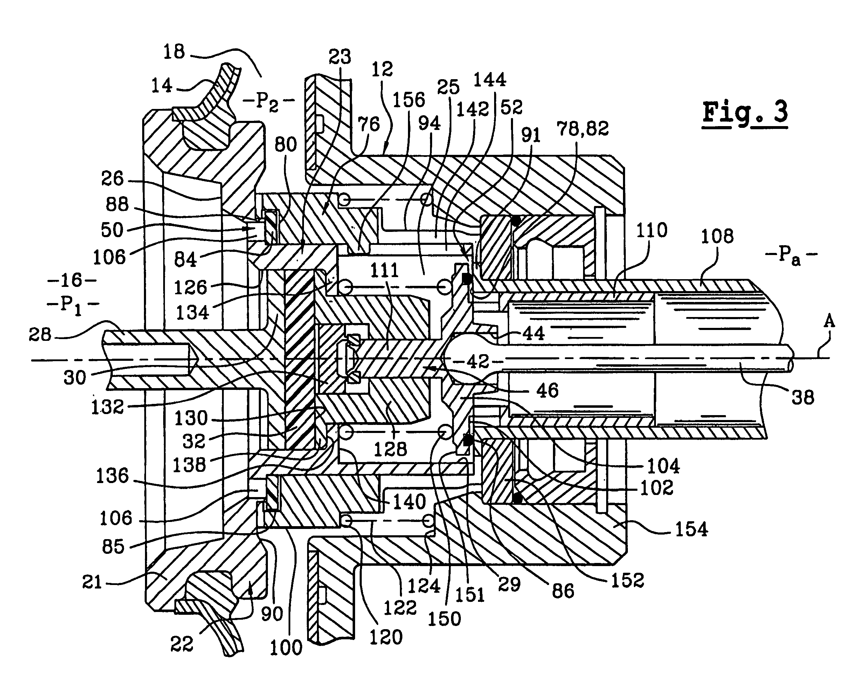

A cet effet, comme l'illustrent les figures 3 à 6, le servomoteur 12 comporte :
- un élément 76 tubulaire flottant, qui est monté coulissant sur un tronçon arrière 23 du piston 22 tubulaire et qui est rappelé élastiquement vers la cloison mobile 14, dont une face 78 transversale comporte un premier élément 82 transversal d'étanchéité du clapet 52 axial d'admission et dont une autre face 80 transversale décalée comporte un premier élément 84 transversal d'étanchéité du clapet axial 50 de rééquilibrage,
- un second élément 86 transversal complémentaire d'étanchéité du clapet 52 axial d'admission, porté le plongeur 46, et
- un second élément 88 transversal complémentaire d'étanchéité du clapet 50 axial de rééquilibrage, constitué d'au moins une portion de la face 90 délimitant les tronçons 21 avant et 23 arrière du piston 22,
et en ce qu'il comporte un ressort 150 de rappel interposé axialement dans l'élément 76 tubulaire flottant entre le plongeur 46 et le tronçon arrière 23 du piston 22 tubulaire pour exercer un effort de rappel sur la tige 38 de commande.

Le clapet 52 axial d'admission est agencé à l'extrémité arrière d'une chambre intérieure 25 du piston tubulaire 22 qui est formée dans le tronçon arrière 23 du piston 22 et qui communique radialement avec la chambre arrière 18, le premier élément 82 transversal d'étanchéité du clapet 52 axial d'admission entourant un conduit 108 d'admission axial qui est formé dans l'élément 76 tubulaire flottant et qui communique avec le milieu extérieur à la pression "Pₐ", et le second élément 86 transversal complémentaire d'étanchéité du clapet 52 axial d'admission étant reçu avec jeu dans un perçage axial 29 du piston 22 communiquant avec la chambre intérieure 25,

Le clapet axial 50 de rééquilibrage est, quant à lui, agencé à l'extérieur du piston 22 tubulaire. Il est agencé radialement à l'extérieur d'au moins un conduit 106 de rééquilibrage du piston tubulaire 22 qui met en communication la chambre avant 16 et la chambre arrière 18.

Plus particulièrement, l'élément tubulaire 76 flottant comporte un tronçon 100 tubulaire avant, qui est monté coulissant sur le tronçon arrière 23 du piston 22. Le tronçon 100 tubulaire avant porte à son extrémité libre avant le premier élément 84 d'étanchéité du clapet 50 de rééquilibrage, qui est destiné à coopérer avec le second élément d'étanchéité 88 du clapet 50 de rééquilibrage porté par la portion de la face arrière 90 du tronçon avant 21 du piston 22. Pour former la clapet 50 de rééquilibrage, les premier et second éléments 84, 88 d'étanchéité du clapet 50 de rééquilibrage sont agencés radialement au moins en partie à l'extérieur d'au moins un perçage 106 de communication entre la chambre 16 avant et la chambre 18 arrière qui traverse le tronçon avant 21 du piston 22.

L'élément tubulaire 76 flottant comporte aussi un tronçon 94 intermédiaire tubulaire, qui est monté coulissant sur le tronçon 23 arrière du piston 22, et dont au moins une lumière 142 longitudinale est agencée radialement au droit d'au moins une lumière 144 longitudinale du tronçon arrière 23 du piston 22 qui permet la communication entre la chambre intérieure 25 du piston 22 et la chambre arrière 18.

Pour garantir un débit d'air maximal entre la chambre intérieure 25 du piston 12 et la chambre arrière 18 du servomoteur lorsque le clapet 52 d'admission est ouvert, le tronçon intermédiaire 94 de l'élément tubulaire 76 flottant comporte une pluralité de lumières 142 longitudinales, par exemple trois lumières agencées radialement à 120° les unes des autres, qui sont agencées chacune au droit d'autant de lumières 144 longitudinales du tronçon arrière 23 du piston 12. Le tronçon tubulaire intermédiaire 94 de l'élément 76 tubulaire flottant comporte par ailleurs au moins un doigt 156 intérieur d'immobilisation en rotation qui est monté coulissant dans au moins une desdites lumières 144 du tronçon arrière 23 du piston 12.

L'élément tubulaire 76 flottant comporte enfin un tronçon 108 tubulaire arrière, d'un diamètre inférieur au diamètre du tronçon 94 intermédiaire, qui forme le conduit 108 communiquant avec le milieu extérieur à la pression "Pₐ" et qui est monté coulissant sur au moins un tronçon tubulaire arrière 110 du plongeur 46. Le tronçon tubulaire 110 est avantageusement traversé par la tige 38 de commande.

Pour former le clapet 52 d'admission, une paroi transversale 91 de jonction entre les tronçons intermédiaire 94 et arrière 108 de l'élément 76 tubulaire, agencée sensiblement axialement à proximité du perçage 29 d'extrémité du tronçon tubulaire arrière 23 du piston 22, comporte sur sa face avant 78 le premier élément 82 d'étanchéité du clapet 52 axial d'admission qui est destiné à coopérer avec le second élément 86 d'étanchéité du clapet 52 axial d'admission qui est porté par le plongeur 46 et qui est reçu dans ledit perçage 29 d'extrémité du tronçon 23 tubulaire arrière du piston 22.

Les éléments d'étanchéités des clapets d'amission 52 et de rééquilibrage 50 peuvent être réalisés de diverses manières connues propres à garantir une parfaite étanchéité des clapets 50, 52 quand ils sont fermés.

Toutefois, dans le mode de réalisation préféré de l'invention, le premier élément 82 d'étanchéité du clapet 52 axial d'admission est constitué d'une partie annulaire de la face avant 78 de la paroi 91 transversale de jonction entre les tronçons intermédiaire 94 et arrière 108 de l'élément tubulaire 76.

Le second élément 86 transversal complémentaire d'étanchéité du clapet 52 axial d'admission, qui est agencé en regard de cette partie annulaire 82, est constitué d'un joint annulaire qui est porté par une face arrière 102 annulaire d'une coupelle 104 qui est portée par le plongeur 46 et qui est reçue avec jeu dans le perçage 29 d'extrémité de la chambre 25 du piston 26 tubulaire.

Dans le mode de réalisation préféré de l'invention, la coupelle 104 est interposée entre un tronçon avant 111 et le tronçon 110 arrière du plongeur 46 avec lesquels elle est venue de matière, mais cette disposition n'est pas limitative de l'invention. La coupelle 104 pourrait notamment être une coupelle rapportée sertie sur le corps du plongeur 46.

De préférence, le joint annulaire 86 est reçu dans une gorge de la face arrière 102 de la coupelle 104 dans laquelle il est par exemple collé.

Pour garantir une parfaite étanchéité entre la chambre arrière 18 et le milieu extérieur à la pression "Pₐ" lorsque le clapet 52 d'admission est fermé, un joint annulaire 152 est interposé entre un tronçon tubulaire arrière 154 de l'enveloppe 12 et le tronçon 108 tubulaire arrière de l'élément tubulaire 76 flottant pour assurer l'étanchéité entre le milieu extérieur et la chambre arrière 18 du servomoteur 11.

Le premier élément 84 d'étanchéité du clapet 50 axial de rééquilibrage est constitué d'un joint 84 annulaire qui est reçu dans une gorge 85 pratiquée dans la face avant libre du tronçon 100 tubulaire d'extrémité avant de l'élément 76 tubulaire. Le joint 84 est par exemple emboîté dans la gorge 85.

Le second élément 88 transversal complémentaire d'étanchéité du clapet axial de rééquilibrage est constitué d'une portion annulaire de la face arrière 90 délimitant les tronçons avant 21 et arrière 23 du piston tubulaire 22.

Pour former des conduits 106 de rééquilibrage propres à garantir un débit d'air maximal, le tronçon avant 21 du piston 22 comporte une pluralité des perçages 106 qui sont répartis angulairement de manière régulière au travers dudit tronçon avant 21 qui débouchent dans la face arrière 90 délimitant les tronçons avant 21 et arrière 23 du piston 22 tubulaire. Cette configuration garantit un débit d'air maximal lors du rééquilibrage des chambres avant 16 et arrière 18.

Comme on le verra dans la suite de la présente description, l'élément 76 tubulaire est rappelé dans des positions de repos, de saturation et d'équilibre du servomoteur 11 contre le piston 22 de manière que le clapet de rééquilibrage 50 demeure fermé, ceci afin de permettre des temps de réaction plus rapides du servomoteur 11 en limitant la durée de la phase de rééquilibrage. A cet effet, une face 120 d'épaulement délimitant le tronçon 100 avant et le tronçon 94 intermédiaire de l'élément 76 tubulaire reçoit en appui l'extrémité d'un ressort 122 de rappel dont l'autre extrémité est en appui sur une face 124 d'épaulement de l'enveloppe 12.

Par ailleurs, le corps du piston 22 comporte un alésage 126 axial interne, qui débouche dans la face avant 26 du piston 22 et dans la chambre intérieure 25 du piston 22. Cet alésage 126 axial interne reçoit l'extrémité 31 de la tige 28 d'actionnement du maître cylindre, qui est conformée sous la forme d'un tulipe 30 d'un diamètre sensiblement égal à celui de l'alésage 126, le disque 32 de réaction, d'un diamètre sensiblement égal à celui de l'alésage 126, et un épaulement 138, d'un diamètre extérieur sensiblement égal à celui de l'alésage 126, d'une douille coulissante 128, qui est traversée par le tronçon avant 111 du plongeur 46. Une face avant 130 de l'épaulement 138, coaxiale à un palpeur 132 fixé à l'extrémité du tronçon avant 11 du plongeur 46, est susceptible, tout comme ledit palpeur 132, de solliciter le disque 32 de réaction.

De cette manière, la tige 28 d'actionnement est susceptible, en fonction de la vitesse d'actionnement de la tige 38 de commande, de transmettre la réaction du maître-cylindre de manière variable pour partie au palpeur 132 et pour partie au piston 22 par l'intermédiaire de l'épaulement 138. Une telle configuration étant largement connue de l'état de la technique et ne faisant pas l'objet de la présente description, elle ne sera pas décrite de manière plus explicite dans la suite de la présente description.

Avantageusement, une paroi transversale 134, formée à l'extrémité de l'alésage axial interne 126, forme d'un côté une butée 136 pour l'épaulement 138 de la douille 128 et reçoit du côté 140 opposé l'extrémité du ressort 150 de rappel dont l'autre extrémité est en appui sur une face avant 151 de la coupelle 104 du plongeur 46. Le ressort 150 de rappel est donc avantageusement reçu dans l'élément 76 tubulaire flottant et de ce fait cette configuration permet, par rapport à un servomoteur conventionnel dans lequel le ressort de rappel de la tige de commande est interposé dans le conduit d'admission axial entre l'enveloppe et la tige de commande, de limiter l'encombrement axial dévolu au ressort de rappel. Le servomoteur 11 est donc d'un encombrement axial d'autant plus réduit.

L'un des avantages principaux de l'invention est que, du fait des formes cylindriques ou tubulaires de la cloison mobile 14, de l'élément tubulaire 76 flottant, de la douille 128 tubulaire intermédiaire, du piston 22, et du plongeur 46, l'écoulement de l'air est favorisé au travers de clapets 50 et 52, ce qui permet de réduire les temps de réponse du servomoteur 11 tout en lui garantissant un fonctionnement silencieux.

Par ailleurs, au moins un de ces éléments, et de préférence la majeure partie de ceux-ci, peut être réalisés par des procédés de découpe et d'emboutissage, ou encore par un procédé de moulage d'un matériau plastique. Cette configuration est particulièrement avantageuse car elle permet de réaliser le servomoteur 11 avec des coûts de fabrication réduits.

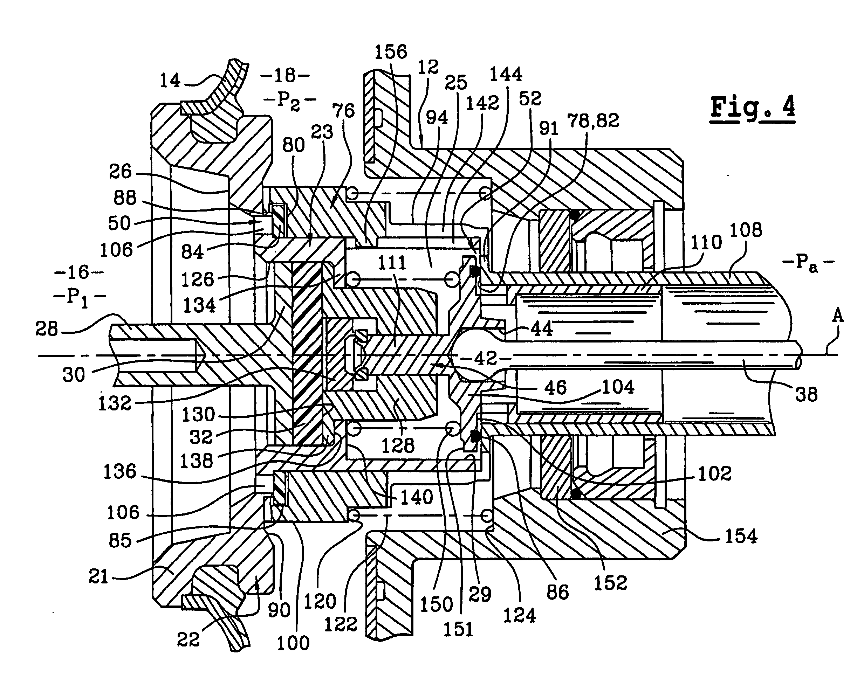

Dans cette configuration, les éléments internes du servomoteur 11 sont susceptibles d'occuper quatre configurations différentes qui ont été représentées aux figures 4 à 6.

Comme l'illustre la figure 3 qui représente une position de repos du servomoteur, la tige de commande 38 est susceptible d'occuper une position de repos. Dans cette position, la coupelle 104 du plongeur 46 étant rappelée contre la paroi 91 de l'élément tubulaire 76 par le ressort 150, le clapet 52 d'admission d'air est fermé. Le clapet 50 de rééquilibrage est fermé lui aussi car le tronçon avant 100 de l'élément tubulaire 76 est rappelé contre la face arrière 90 du piston 22.

Initialement, les chambre avant 16 et arrière 18 sont soumises à la même pression "P₁" de dépression. La cloison mobile est donc au repos.

A partir de cette position, une avancée de la tige de commande 38 provoque une décompression du ressort 122 de rappel de l'élément tubulaire jusqu'à une position dite d'équilibre du servomoteur qui a été représentée à la figure 4. La décompression du ressort 122 de rappel de l'élément tubulaire pousse le piston 22 et la paroi mobile 14 vers l'avant et permet un début d'actionnement de la tige 28 de commande du maître cylindre.

Par ailleurs, le ressort 122 étant décomprimé, il ne plaque plus que légèrement la paroi 91 de l'élément tubulaire 76 contre la coupelle 104 du plongeur 46. Les clapets 50 et 52 demeurent toutefois fermés.

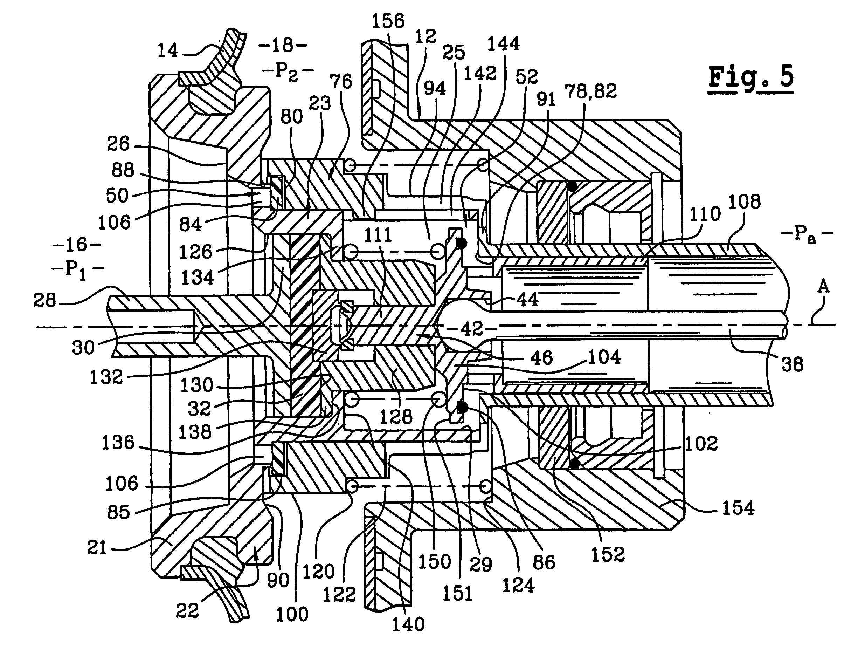

Une avancée de la tige de commande 38 provoque la compression du ressort 150 du rappel du plongeur 46, ce qui permet le décollement de la coupelle 104 de la paroi 91 de l'élément tubulaire 76, et donc l'ouverture du clapet 52 d'admission, comme représenté à la figure 5 qui représente une position dite de saturation du servomoteur. L'air à la pression atmosphérique "Pₐ" pénètre alors dans la chambre intérieure 25 du piston 22 et passe par les lumières 142, 144 pour remplir la chambre 18 arrière, ce qui a pour effet, du fait de la différence de pression entre la chambre arrière 18 et la chambre avant 16, d'actionner la cloison mobile 14 et donc le piston 22 et la tige d'actionnement 28 du maître-cylindre.

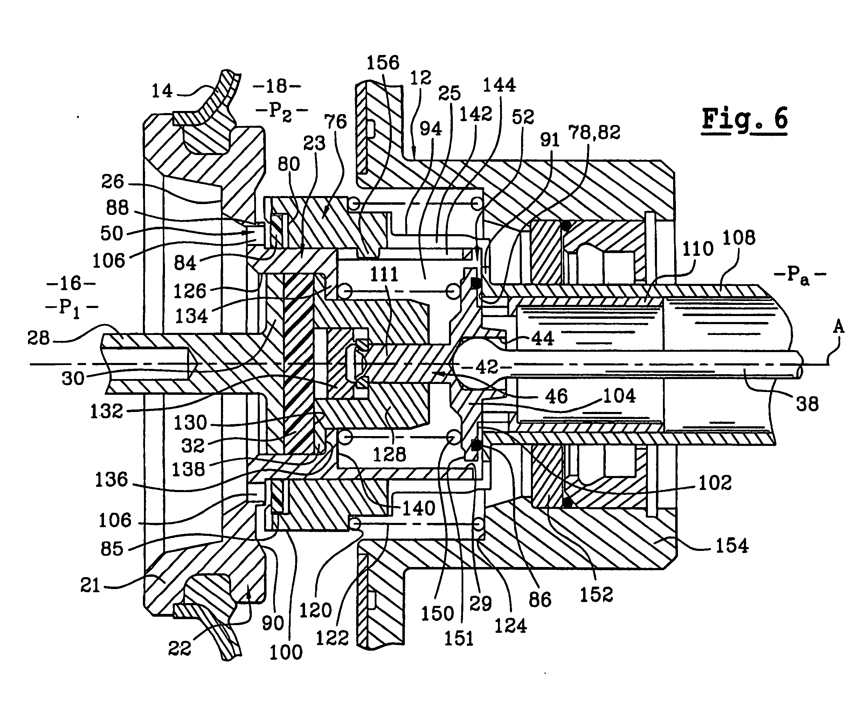

Enfin, si la tige 38 de commande est relâchée, comme représenté à la figure 6 qui illustre une position de retour du servomoteur 11, l'élément tubulaire 76 est rappelé par la coupelle 104, qui est à nouveau en appui sur la paroi 91 dudit élément tubulaire 76, avant même que la différence de pression entre les chambres arrière 18 et avant 16 ne se soit annulée. De ce fait, le tronçon avant 100 de l'élément tubulaire 100 décolle de la face arrière 90 du piston 22, ce qui provoque brièvement l'ouverture du clapet 50 de rééquilibrage. L'air à la pression atmosphérique de la chambre arrière 18 est alors évacué dans la chambre avant 16 et les chambres avant 16 et arrière 18 sont à nouveau soumises à la pression "P₁" de dépression, comme cela a été précédemment représenté à la figure 3.

Le temps de retour du servomoteur 11 en position repos se trouve donc considérablement réduit du fait de la durée réduite de la phase de rééquilibrage des pressions entre les chambres avant 16 et arrière 18.

L'invention permet donc de bénéficier d'un servomoteur bénéficiant d'un temps de réponse réduit et d'un fonctionnement particulièrement silencieux, qui fait de surcroît largement appel à une conception tubulaire emboutie ou moulée, ce qui permet d'assurer sa fabrication à moindre coût.

## Revendications

1. Servomoteur (11) pneumatique d'assistance au freinage pour un véhicule automobile,
du type qui comporte une enveloppe (12) rigide à l'intérieur de laquelle est mobile une cloison (14) transversale délimitant de façon étanche une chambre avant (16), soumise à une première pression (P₁), et une chambre arrière (18), soumise à une deuxième pression (P₂) variant entre la première pression (P₁) et une pression (Pₐ) supérieure à la première pression (P₁), qui est susceptible de solliciter une tige (28) d'actionnement d'un maître cylindre (13) associé au servomoteur (11) par l'intermédiaire d'un disque (32) de réaction,
du type qui comporte un piston (22) mobile tubulaire qui est monté coulissant dans l'enveloppe (12) et dont un tronçon avant est solidaire de la cloison (14) mobile,
du type qui comporte une tige (38) de commande se déplaçant dans le piston (22) sélectivement en fonction d'un effort axial d'entrée exercé vers l'avant à l'encontre d'un effort de rappel,
du type dans lequel les mouvements de la tige (38) de commande sont susceptibles de déterminer les ouvertures et fermetures d'au moins un clapet (52) axial dit "d'admission" qui est interposé entre une source de pression soumise à la pression (Pₐ) supérieure à la première pression (P₁) et la chambre arrière (18), et d'au moins un clapet axial (50) dit "de rééquilibrage" qui est interposé entre la chambre avant (16) et la chambre arrière (18), pour actionner la cloison (14) mobile,
et du type dans lequel un plongeur (46), qui est reçu dans le piston (22) tubulaire, qui traverse la cloison (14) mobile, et qui est solidaire de l'extrémité de la tige (38) de commande, est susceptible de solliciter directement la tige (28) d'actionnement du maître-cylindre (13) par l'intermédiaire du disque (32) de réaction,
**caractérisé en ce qu'**il comporte :
- un élément (76) tubulaire flottant, qui est monté coulissant sur un tronçon arrière (23) du piston (22) tubulaire et qui est rappelé élastiquement vers la cloison mobile (14), dont une face (78) transversale comporte un premier élément (82) transversal d'étanchéité du clapet (52) axial d'admission et dont une autre face (80) transversale décalée comporte un premier élément (84) transversal d'étanchéité du clapet (50) axial de rééquilibrage,
- un second élément (86) transversal complémentaire d'étanchéité du clapet (52) axial d'admission, porté par le plongeur (46), et
- un second élément (88) transversal complémentaire d'étanchéité du clapet (50) axial de rééquilibrage, constitué d'au moins une portion de la face (90) délimitant les tronçons (21) avant et (23) arrière du piston (22),
et **en ce qu'**il comporte un ressort (150) de rappel interposé axialement dans l'élément (76) tubulaire flottant entre le plongeur (46) et le tronçon arrière (23) du piston (22) tubulaire pour exercer un effort de rappel sur la tige (38) de commande.

2. Servomoteur (11) selon la revendication précédente, **caractérisé en ce que** :
- le clapet (52) axial d'admission est agencé à l'extrémité d'une chambre intérieure (25) du piston tubulaire (22) qui est formée dans le tronçon arrière (23) du piston (22) et qui communique radialement avec la chambre arrière (18), le premier élément (82) transversal d'étanchéité du clapet (52) axial d'admission entourant un conduit (108) d'admission axial qui est formé dans l'élément (76) tubulaire flottant et qui communique avec le milieu extérieur et le second élément (86) transversal complémentaire d'étanchéité du clapet (52) axial d'admission étant reçu avec jeu dans un perçage axial (29) du piston (22) communiquant avec la chambre intérieure (25),
- le clapet (50) axial de rééquilibrage est agencé à l'extérieur du piston (22) tubulaire et il est agencé radialement à l'extérieur d'au moins un conduit (106) de rééquilibrage du piston (22) tubulaire mettant en communication la chambre avant (16) et la chambre arrière (18).

3. Servomoteur (11) selon la revendication précédente, **caractérisé en ce que** l'élément tubulaire (76) flottant comporte :
- un tronçon (100) tubulaire avant, monté coulissant sur le tronçon arrière (23) du piston (22), qui porte le premier élément (84) d'étanchéité du clapet (50) de rééquilibrage, et qui est destiné à coopérer avec le second élément (88) d'étanchéité du clapet (50) de rééquilibrage porté par la portion de la face arrière (90) du tronçon avant (21) du piston (22), les premier et second éléments (84, 88) d'étanchéité du clapet (50) de rééquilibrage étant agencés radialement au moins en partie à l'extérieur d'au moins un perçage (106) de communication entre la chambre (16) avant et la chambre (18) arrière qui traverse le tronçon avant (21) du piston (22),
- un tronçon (94) tubulaire intermédiaire, qui est monté coulissant sur le tronçon (23) arrière du piston (22), et dont au moins une lumière (142) longitudinale est agencée radialement au droit d'au moins une lumière (144) longitudinale du tronçon arrière (23) du piston (22) qui permet la communication entre la chambre intérieure (25) du piston et la chambre arrière (18),
- un tronçon (108) tubulaire arrière, d'un diamètre inférieur au diamètre du tronçon (94) intermédiaire, qui forme le conduit communiquant avec le milieu extérieur et qui est monté coulissant sur au moins un tronçon (110) tubulaire arrière du plongeur (46) traversé par la tige (38) de commande,
et **en ce qu'**une paroi (91) transversale de jonction entre les tronçons (94) intermédiaire et arrière (108) de l'élément (76) tubulaire, agencée sensiblement axialement à proximité du perçage (29) d'extrémité du tronçon (23) tubulaire arrière du piston (22), comporte le premier élément (82) d'étanchéité du clapet (52) axial d'admission qui est destiné à coopérer avec le second élément (86) d'étanchéité du clapet (52) axial d'admission qui est porte par le plongeur (46) et qui est reçu dans ledit perçage (29) d'extrémité du tronçon (23) tubulaire arrière du piston (22).

4. Servomoteur (11) selon la revendication précédente, **caractérisé en ce que** :
- le premier élément (82) d'étanchéité du clapet (52) axial d'admission est constitué d'une partie annulaire de la face avant (78) de la paroi (91) transversale de jonction entre les tronçons intermédiaire (94) et arrière (108) de l'élément tubulaire (76),
- le second élément (86) transversal complémentaire d'étanchéité du clapet (52) axial d'admission est constitué d'un joint annulaire qui est porté par une face arrière (102) annulaire d'une coupelle (104) qui est portée par le plongeur (46) et qui est reçue avec jeu dans le perçage (29) d'extrémité de la chambre (25)du piston tubulaire,
- le premier élément (84) d'étanchéité du clapet (50) axial de rééquilibrage est constitué d'un joint annulaire qui est reçu dans une gorge (85) pratiquée dans la face avant du tronçon (100) tubulaire d'extrémité avant de l'élément (76) tubulaire,
- le second élément (84) transversal complémentaire d'étanchéité du clapet axial de rééquilibrage est constitué d'une portion annulaire de la face arrière (90) délimitant les tronçons avant (21) et arrière (23) du piston tubulaire.

5. Servomoteur (11) selon l'une des revendications précédentes, **caractérisé en ce qu'**il comporte une pluralité des perçages (106) qui sont répartis angulairement de manière régulière au travers du tronçon avant (21) du piston (22) et qui débouchent dans la face arrière (90) délimitant les tronçons avant (21) et arrière (23) du piston (22) tubulaire pour former les conduits (106) de rééquilibrage.

6. Servomoteur (11) pneumatique selon l'une quelconque des revendications 2 à 5, **caractérisé en ce que** le corps du piston (22) comporte un alésage (126) axial interne, qui débouche dans la face avant (26) du piston (22) et dans la chambre (25) intérieure du piston (22), et qui reçoit :
- l'extrémité (30) de la tige (28) d'actionnement du maître cylindre,
- le disque (32) de réaction,
- une douille (128) coulissante, traversée par un tronçon (111) avant du plongeur (46), dont un épaulement (138) comporte une face avant (130), qui est coaxiale à un palpeur (132) formé à l'extrémité avant du plongeur (46), pour solliciter le disque (32) de réaction.

7. Servomoteur (11) pneumatique selon la revendication précédente, **caractérisé en ce qu'**une paroi (134) transversale, formée à l'extrémité de l'alésage (126) axial interne, forme d'un côté une butée (136) pour l'épaulement (138) de la douille (128) et reçoit du côté (140) opposé l'extrémité du ressort (150) de rappel dont l'autre extrémité est en appui sur une face avant (151) de la coupelle (104) du plongeur (46).

8. Servomoteur (11) pneumatique selon l'une des revendications 3 à 7, **caractérisé en ce qu'**une face (120) d'épaulement délimitant le tronçon (100) avant et le tronçon (94) intermédiaire de l'élément (76) tubulaire reçoit en appui l'extrémité d'un ressort (122) de rappel dont l'autre extrémité est en appui sur une face (124) d'épaulement de l'enveloppe (12).

9. Servomoteur (11) selon l'une des revendications 4 à 8, **caractérisé en ce que** la coupelle (104) est interposée axialement entre les tronçons arrière (108) et avant (111) du plongeur (46) avec lesquels elle est venue de matière.

10. Servomoteur (11) selon l'une des revendications 3 à 9, **caractérisé en ce qu'**un joint annulaire (152) est interposé entre un tronçon (154) tubulaire arrière de l'enveloppe (12) et le tronçon (108) tubulaire arrière de l'élément (76) tubulaire flottant pour assurer l'étanchéité entre le milieu extérieur et la chambre arrière (18) du servomoteur (11).

11. Servomoteur (11) selon l'une des revendications 3 à 10, **caractérisé en ce que** le tronçon intermédiaire (94) de l'élément (76) tubulaire flottant comporte une pluralité de lumières (142) longitudinales agencées chacune au droit de lumières longitudinales (144) du tronçon arrière (23) du piston (22), et **en ce que** le tronçon tubulaire (94) intermédiaire de l'élément (76) tubulaire flottant comporte au moins un doigt (156) d'immobilisation en rotation qui est monté coulissant dans au moins une desdites lumières (144) du tronçon arrière (23) du piston (22).

12. Servomoteur (11) selon les reveridications précédentes, **caractérisé en ce que** au moins un élément parmi la cloison (14) mobile, l'élément (76) tubulaire flottant, la douille (128) intermédiaire, le plongeur (46) et le piston (22), est réalisé par des procédés de découpe et d'emboutissage.

13. Servomoteur (11) selon les revendications précédentes, **caractérisé en ce que** au moins un élément parmi la cloison (14) mobile, l'élément (76) tubulaire flottant, la douille (128) intermédiaire, le plongeur (46) et le piston (22), est réalisé par un procédé de moulage d'un matériau plastique.

## Patentansprüche

1. Pneumatischer Servomotor (11) zur Bremsunterstützung für ein Kraftfahrzeug,
vom Typ, der ein starres Gehäuse (12) aufweist, in dem eine quer verlaufende Wand (14) beweglich ist, die in dichter Weise eine vordere Kammer (16), die einem ersten Druck (P₁) ausgesetzt ist, und eine hintere Kammer (18) abgrenzt, die einem zweiten Druck (P₂) ausgesetzt ist, welcher zwischen dem ersten Druck (P₁) und einem Druck (Pₐ) variiert, der höher ist als der erste Druck (P₁), und die mittels einer Reaktionsscheibe (32) eine Betätigungsstange (28) eines Hauptzylinders (13), der dem Servomotor (11) zugeordnet ist, beaufschlagen kann,
vom Typ, der einen beweglichen, röhrenförmigen Kolben (22) aufweist, der gleitend in dem Gehäuse (12) angebracht und bei dem ein vorderer Abschnitt fest mit der beweglichen Wand (14) verbunden ist,
vom Typ, der eine Steuerstange (38) aufweist, die sich in dem Kolben (22) selektiv in Abhängigkeit von einer axialen Eingangskraft, welche nach vorne ausgeübt wird, entgegen einer Rückstellkraft verschiebt,
vom Typ, bei dem die Bewegungen der Steuerstange (38) die Öffnungs- und Schließvorgänge mindestens eines axialen Ventils (52), genannt "Einlassventil", das zwischen einer Druckquelle, die dem Druck (Pₐ) ausgesetzt ist, welcher höher ist als der erste Druck (P₁), und der hinteren Kammer (18) zwischengeschaltet ist, und mindestens eines axialen Ventils (50), genannt "Ausgleichsventil", das zwischen der vorderen Kammer (16) und der hinteren Kammer (18) zwischengeschaltet ist, bestimmen können, um die bewegliche Wand (14) zu betätigen,
und vom Typ, bei dem ein Tauchkolben (46), der in dem röhrenförmigen Kolben (22) aufgenommen ist, der die bewegliche Wand (14) durchquert und fest mit dem Ende der Steuerstange (38) verbunden ist, die Betätigungsstange (28) des Hauptzylinders (13) mittels der Reaktionsscheibe (32) direkt beaufschlagen kann,
**dadurch gekennzeichnet, dass** er folgendes aufweist:
- ein röhrenförmiges, schwimmendes Element (76), das gleitend an einem hinteren Abschnitt (23) des röhrenförmigen Kolbens (22) angebracht, elastisch zur beweglichen Wand (14) zurückgestellt ist und bei dem eine quer verlaufende Fläche (78) ein erstes quer verlaufendes Dichtelement des axialen Einlassventils (52) aufweist und bei dem eine weitere quer verlaufende, versetzte Fläche (80) ein erstes quer verlaufendes Dichtelement (84) des axialen Ausgleichsventils (50) aufweist,
- ein zweites, quer verlaufendes, komplementäres Dichtelement (86) des axialen Einlassventils (52), das von dem Tauchkolben (46) getragen ist, und
- ein zweites, quer verlaufendes, komplementäres Dichtelement (88) des axialen Ausgleichsventils (50), das mindestens aus einem Teilstück der Fläche (90) besteht, die den vorderen (21) und den hinteren Abschnitt (23) des Kolbens (22) begrenzt,
und dass er eine Rückstellfeder (150) aufweist, die axial in dem röhrenförmigen, schwimmenden Element (76) zwischen dem Tauchkolben (46) und dem hinteren Abschnitt (23) des röhrenförmigen Kolbens (22) zwischengeschaltet ist, um eine Rückstellkraft auf die Steuerstange (38) auszuüben.

2. Servomotor (11) nach dem vorhergehenden Anspruch, **dadurch gekennzeichnet, dass**:
- das axiale Einlassventil (52) am hinteren Ende einer inneren Kammer (25) des röhrenförmigen Kolbens (22) angeordnet ist, welche in dem hinteren Abschnitt (23) des Kolbens (22) gebildet und radial mit der hinteren Kammer (18) verbunden ist, wobei das erste, quer verlaufenden Dichtelement (82) des axialen Einlassventils (52) eine axiale Einlassleitung (108) umgibt, die in dem röhrenförmigen, schwimmenden Element (76) gebildet und mit dem Außenbereich verbunden ist, und wobei das zweite, quer verlaufende, komplementäre Dichtelement (86) des axialen Einlassventils (52) mit Spiel in einem axialen Loch (29) des Kolbens (22) aufgenommen ist, welches mit der inneren Kammer (25) verbunden ist,
- das axiale Ausgleichsventil (50) außerhalb des röhrenförmigen Kolbens (22) und radial außerhalb mindestens einer Ausgleichsleitung (106) des röhrenförmigen Kolbens (22) angeordnet ist, welche die vordere Kammer (16) und die hintere Kammer (18) verbindet.

3. Servomotor (11) nach dem vorhergehenden Anspruch, **dadurch gekennzeichnet, dass** das röhrenförmige, schwimmende Element (76) folgendes aufweist:
- einen röhrenförmigen, vorderen Abschnitt (100), der gleitend auf dem hinteren Abschnitt (23) des Kolbens (22) angebracht ist und das erste Dichtelement (84) des Ausgleichsventils (50) trägt, welches mit dem zweiten Dichtelement (88) des Ausgleichsventils (50) zusammenwirken soll, das von dem Teilstück der hinteren Fläche (90) des vorderen Abschnitts (21) des Kolbens (22) getragen ist, wobei das erste und zweite Dichtelement (84, 88) des Ausgleichsventils (50) radial mindestens teilweise außerhalb mindestens eines Verbindungslochs (106) zwischen der vorderen Kammer (16) und der hinteren Kammer (18), das den vorderen Abschnitt (21) des Kolbens (22) durchquert, angeordnet sind,
- einen röhrenförmigen Zwischenabschnitt (94), der gleitend auf dem hinteren Abschnitt (23) des Kolbens (22) angebracht ist und bei dem mindestens ein Langloch (142) radial gegenüber mindestens einem Langloch (144) des hinteren Abschnitts (23) des Kolbens (22) angeordnet ist, der die Verbindung zwischen der inneren Kammer (25) des Kolbens und der hinteren Kammer (18) ermöglicht,
- einen röhrenförmigen, hinteren Abschnitt (108), der einen kleineren Durchmesser als der Zwischenabschnitt (94) besitzt, der die mit dem Außenbereich verbundene Leitung bildet und der auf mindestens einem röhrenförmigen, hinteren, von der Steuerstange (38) durchquerten Abschnitt (110) des Tauchkolbens (46) gleitend angebracht ist,
und dass eine quer verlaufende Anschlusswand (91) zwischen dem Zwischenabschnitt (94) und dem hinteren Abschnitt (108) des röhrenförmigen Elements (76), die im Wesentlichen axial nahe an dem Endloch (29) des röhrenförmigen, hinteren Abschnitts (23) des Kolbens (22) angeordnet ist, das erste Dichtelement (82) des axialen Einlassventils (52) aufweist, das mit dem zweiten Dichtelement (86) des axialen Einlassventils (52) zusammenwirken soll, das von dem Tauchkolben (46) getragen und in dem Endloch (29) des röhrenförmigen, hinteren Abschnitts (23) des Kolbens (22) aufgenommen ist.

4. Servomotor (11) nach dem vorhergehenden Anspruch, **dadurch gekennzeichnet, dass**:
- das erste Dichtelement (82) des axialen Einlassventils (52) aus einem ringförmigen Teil der vorderen Fläche (78) der quer verlaufenden Anschlusswand (91) zwischen dem Zwischenabschnitt (94) und dem hinteren Abschnitt (108) des röhrenförmigen Elements (76) besteht,
- das zweite, quer verlaufende, komplementäre Dichtelement (86) des axialen Einlassventils (52) aus einer ringförmigen Dichtung besteht, die von einer ringförmigen, hinteren Fläche (102) einer Schale (104) getragen ist, welche von dem Tauchkolben (46) getragen und mit Spiel in dem Endloch (29) der Kammer (25) des röhrenförmigen Kolbens aufgenommen ist,
- das erste Dichtelement (84) des axialen Ausgleichsventils (50) aus einer ringförmigen Dichtung besteht, die in einer Nut (85) aufgenommen ist, die in der vorderen Fläche des röhrenförmigen Abschnitts (100) an dem vorderen Ende des röhrenförmigen Elements (76) ausgebildet ist,
- das zweite, quer verlaufende, komplementäre Dichtelement (84) des axialen Ausgleichsventils aus einem ringförmigen Teilstück der hinteren Fläche (90) besteht, die den vorderen (21) und hinteren (23) Abschnitt des röhrenförmigen Kolbens begrenzt.

5. Servomotor (11) nach einem der vorhergehenden Ansprüche, **dadurch gekennzeichnet, dass** er mehrere Löcher (106) aufweist, die winkelmäßig in gleichmäßiger Weise durch den vorderen Abschnitt (21) des Kolbens (22) verteilt sind und die in die hintere Fläche (90) münden, welche den vorderen (21) und hinteren (23) Abschnitt des röhrenförmigen Kolbens (22) begrenzt, um die Ausgleichsleitungen (106) zu bilden.

6. Pneumatischer Servomotor (11) nach einem der Ansprüche 2 bis 5, **dadurch gekennzeichnet, dass** der Körper des Kolbens (22) eine axiale, innere Bohrung (126) aufweist, die in die vordere Fläche (26) des Kolbens (22) und in die innere Kammer (25) des Kolbens (22) mündet, und er folgendes aufnimmt:
- das Ende (30) der Betätigungsstange (28) des Hauptzylinders,
- die Reaktionsscheibe (32),
- eine gleitende Hülse (128), die von einem vorderen Abschnitt (111) des Tauchkolbens (46) durchquert ist und bei der ein Absatz (138) eine vordere Fläche (130) aufweist, die koaxial zu einem Taster (132) ist, der an dem vorderen Ende des Tauchkolbens (46) gebildet ist, um die Reaktionsscheibe (32) zu beaufschlagen.

7. Pneumatischer Servomotor (11) nach dem vorhergehenden Anspruch, **dadurch gekennzeichnet, dass** eine quer verlaufende Wand (134), die am Ende der axialen, inneren Bohrung (126) gebildet ist, an einer Seite einen Anschlag (136) für den Absatz (138) der Hülse (128) bildet und an der gegenüberliegenden Seite (140) das Ende der Rückstellfeder (150) aufnimmt, deren anderes Ende an einer vorderen Fläche (151) der Schale (104) des Tauchkolbens (46) anliegt.

8. Pneumatischer Servomotor (11) nach einem der Ansprüche 3 bis 7, **dadurch gekennzeichnet, dass** an einer Absatzfläche (120), die den vorderen Abschnitt (100) und den Zwischenabschnitt (94) des röhrenförmigen Elements (76) begrenzt, das Ende einer Rückstellfeder (122) anliegt, deren anderes Ende an einer Absatzfläche (124) des Gehäuses (12) anliegt.

9. Servomotor (11) nach einem der Ansprüche 4 bis 8, **dadurch gekennzeichnet, dass** die Schale (104) axial zwischen dem hinteren (108) und dem vorderen (111) Abschnitt des Tauchkolbens (46) zwischengeschaltet ist, mit denen sie einstückig ausgebildet ist.

10. Servomotor (11) nach einem der Ansprüche 3 bis 9, **dadurch gekennzeichnet, dass** eine ringförmige Dichtung (152) zwischen einem röhrenförmigen, hinteren Abschnitt (154) des Gehäuses (12) und dem röhrenförmigen, hinteren Abschnitt (108) des röhrenförmigen, schwimmenden Elements (76) zwischengeschaltet ist, um die Dichtigkeit zwischen dem Außenbereich und der hinteren Kammer (18) des Servomotors (11) zu gewährleisten.

11. Servomotor (11) nach einem der Ansprüche 3 bis 10, **dadurch gekennzeichnet, dass** der Zwischenabschnitt (94) des röhrenförmigen, schwimmenden Elements (76) mehrere Langlöcher (142) aufweist, die jeweils gegenüber von Langlöchern (144) des hinteren Abschnitts (23) des Kolbens (22) angeordnet sind, und dass der röhrenförmige Zwischenabschnitt (94) des röhrenförmigen, schwimmenden Elements (76) mindestens einen Finger (156) zum Verhindern einer Drehung aufweist, der gleitend in mindestens einem der Langlöcher (144) des hinteren Abschnitts (23) des Kolbens (22) angebracht ist.

12. Servomotor (11) nach den vorhergehenden Ansprüchen, **dadurch gekennzeichnet, dass** mindestens die bewegliche Wand (14), das röhrenförmige, schwimmende Element (76), die Zwischenhülse (128), der Tauchkolben (46) oder der Kolben (22) durch Stanz- und Tiefziehverfahren realisiert ist.

13. Servomotor (11) nach den vorhergehenden Ansprüchen, **dadurch gekennzeichnet, dass** mindestens die bewegliche Wand (14), das röhrenförmige, schwimmende Element (76), die Zwischenhülse (128), der Tauchkolben (46) oder der Kolben (22) durch ein Formverfahren aus einem Kunststoffinaterial realisiert ist.

## Claims

1. Pneumatic brake booster (11) for a motor vehicle, of the type comprising a rigid casing (12) inside which there can move a transverse partition (14) delimiting, in sealed fashion, a front chamber (16) subjected to a first pressure (P₁) and a rear chamber (18) subjected to a second pressure (P₂) that varies between the first pressure (P₁) and a pressure (Pₐ) higher than the first pressure (P₁), which is able to act upon an actuating rod (28) that actuates a master cylinder (13) associated with the booster (11), via a reaction disk (32),
of the type comprising a mobile tubular piston (22) which is mounted to slide in the casing (12) and a front section of which is secured to the moving partition (14),
of the type which comprises an operating rod (38) moving in the piston (22) selectively as a function of an axial input force exerted forwards against the action of a return force,
of the type in which the movements of the operating rod (38) are able to determine the openings and closings of at least one axial valve (52) known as the "intake valve" which is interposed between a source of pressure subjected to the pressure (Pₐ) higher than the first pressure (P₁) and the rear chamber (18), and at least one axial valve (50) known as the "re-equalizing valve" which is interposed between the front chamber (16) and the rear chamber (18) to actuate the moving partition (14),
and of the type in which a plunger (46), which is housed in the tubular piston (22), which passes through the moving partition (14) and which is secured to the end of the operating rod (38) is able to act directly on the actuating rod (28) of the master cylinder (13) via the reaction disk (32),
**characterized in that** it comprises:
- a floating tubular element (76), which is mounted to slide on a rear section (23) of the tubular piston (22) and which is returned elastically towards the moving partition (14), a transverse face (78) of which comprises a first transverse sealing element (82) for the axial intake valve (52) and another, offset, transverse face (80) of which comprises a first transverse sealing element (84) for the axial re-equalizing valve (50),
- a complementary second transverse sealing element (86) for the axial intake valve (52), borne by the plunger (46), and
- a complementary second transverse sealing element (88) for the axial re-equalizing valve (50), consisting of at least a portion of the face (90) delimiting the front (21) and rear (23) sections of the piston (22),
and **in that** it comprises a return spring (150) interposed axially in the floating tubular element (76) between the plunger (46) and the rear section (23) of the tubular piston (22) so as to exert a return force on the operating rod (38).

2. Booster (11) according to the preceding claim,
**characterized in that**:
- the axial intake valve (52) is arranged at the end of an interior chamber (25) of the tubular piston (22) which chamber is formed in the rear section (23) of the piston (22) and which communicates radially with the rear chamber (18), the first transverse sealing element (82) for the axial intake valve (52) surrounding an axial intake duct (108) which is formed in the floating tubular element (76) and which communicates with the exterior surroundings and the complementary second transverse sealing element (86) for the axial intake valve (52) being housed with clearance in an axial drilling (29) in the piston (22) communicating with the interior chamber (25),
- the axial re-equalizing valve (50) is arranged on the outside of the tubular piston (22) and is arranged radially on the outside of at least one re-equalizing duct (106) of the tubular piston (22) placing the front chamber (16) in communication with the rear chamber (18).

3. Booster (11) according to the preceding claim, **characterized in that** the floating tubular element (76) comprises:
- a tubular front section (100) mounted to slide on the rear section (23) of the piston (22), which bears the first sealing element (84) for the re-equalizing valve (50), and which is intended to collaborate with the second sealing element (88) for the re-equalizing valve (50) borne by the portion of the rear face (90) of the front section (21) of the piston (22), the first and second sealing elements (84, 88) for the re-equalizing valve (50) being arranged radially at least on the outside of at least one drilling (106) for communication between the front chamber (16) and the rear chamber (18) which passes through the front section (21) of the piston (22),
- an intermediate tubular section (94) which is mounted to slide on the rear section (23) of the piston (22) and of which at least one longitudinal slot (142) is arranged radially in line with at least one longitudinal slot (144) of the rear section (23) of the piston (22) to allow communication between the interior chamber (25) of the piston and the rear chamber (18),
- a rear tubular section (108), of a diameter smaller than the diameter of the intermediate section (94), which forms the duct communicating with the exterior surroundings and which is mounted to slide on at least a rear tubular section (110) of the plunger (46) through which the operating rod (38) passes,
and **in that** a transverse joining wall (91) connecting the intermediate (94) and rear (108) sections of the tubular element (76) and arranged more or less axially near the end drilling (29) in the rear tubular section (23) of the piston (22) comprises the first sealing element (82) for the axial intake valve (52) which is intended to collaborate with the second sealing element (88) of the axial intake valve (52) which is borne by the plunger (46) and which is housed in said end drilling (29) of the rear tubular section (23) of the piston (22).

4. Booster (11) according to the preceding claim,
**characterized in that**:
- the first sealing element (82) for the axial intake valve (52) consists of an annular part of the front face (78) of the transverse joining wall (91) connecting the intermediate (94) and rear (108) sections of the tubular element (76),
- the complementary second transverse sealing element (88) for the axial intake valve (52) is made up of an annular seal borne by an annular rear face (102) of a spring plate (104) borne by the plunger (46) and housed with clearance in the end drilling (29) of the chamber (25) of the tubular piston,
- the first sealing element (84) for the axial re-equalizing valve (50) consists of an annular seal housed in a groove (85) made in the front face of the front tubular end section (100) of the tubular element (76),
- the complementary second transverse sealing element (88) for the axial re-equalizing valve consists of an annular portion of the rear face (90) delimiting the front (21) and rear (23) sections of the tubular piston.

5. Booster (11) according to one of the preceding claims, **characterized in that** it comprises a plurality of drillings (106) with uniform angular distribution through the front section (21) of the piston (22) and which open into the rear face (90) delimiting the front (21) and rear (23) sections of the tubular piston (22) so as to form the re-equalizing ducts (106).

6. Pneumatic booster (11) according to any one of claims 2 to 5, **characterized in that** the body of the piston (22) comprises an internal axial bore (126) which opens into the front face (26) of the piston (22) and into the interior chamber (25) of the piston (22), and which houses:
- the end (30) of the master cylinder actuating rod (28),
- the reaction disk (32),
- a sliding sleeve (128), through which a front section (111) of the plunger (46) passes, and a shoulder (138) of which comprises a front face (130) coaxial with a feeler (132) formed at the front end of the plunger (46) to act upon the reaction disk (32).

7. Pneumatic booster (11) according to the preceding claim, **characterized in that** a transverse wall (134), formed at the end of the internal axial bore (126), forms, on one side, a thrust surface (136) for the shoulder (138) of the sleeve (128) and on the opposite side (140) houses the end of the return spring (150) the other end of which bears against a front face (151) of the spring plate (104) of the plunger (46).

8. Pneumatic booster (11) according to one of claims 3 to 7, **characterized in that** a shoulder face (120) delimiting the front section (100) and the intermediate section (94) of the tubular element (76) has, bearing against it, the end of a return spring (122) the other end of which bears against a shoulder face (124) of the casing (12).

9. Booster (11) according to one of claims 4 to 8, **characterized in that** the spring plate (104) is interposed axially between the rear (108) and front (111) sections of the plunger (46) with which sections it forms an integral part.

10. Booster (11) according to one of claims 3 to 9, **characterized in that** an annular seal (152) is interposed between a tubular rear section (154) of the casing (12) and the rear tubular section (108) of the floating tubular element (76) so as to provide a seal between the exterior surroundings and the rear chamber (18) of the booster (11).

11. Pneumatic booster (11) according to one of claims 3 to 10, **characterized in that** the intermediate section (94) of the floating tubular element (76) comprises a plurality of longitudinal slots (142) each one positioned in line with longitudinal slots (144) on the rear section (23) of the piston (22), and **in that** the intermediate tubular section (94) of the floating tubular element (76) comprises at least one finger (156) for preventing rotation and which is mounted to slide in at least one of said slots (144) of the rear section (23) of the piston (22).

12. Booster (11) according to the preceding claims, **characterized in that** at least one element chosen from the moving partition (14), the floating tubular element (76), the intermediate sleeve (128), the plunger (46) and the piston (22), is made by cutting and pressing methods.

13. Booster (11) according to the preceding claims, **characterized in that** at least one element chosen from the moving partition (14), the floating tubular element (76), the intermediate sleeve (128), the plunger (46) and the piston (22), is made by plastics molding methods.
